# EUROPÄISCHE PATENTSCHRIFT

(11) **EP 1 726 868 B1**
(45) Veröffentlichungstag und Bekanntmachung des Hinweises auf die Patenterteilung: **05.09.2007**
(21) Anmeldenummer: 05011204.4
(22) Anmeldetag: 24.05.2005
(51) Int. Cl.: F16N 13/22, F16N 25/02, F16N 7/38

(54) **Kompakte Schmiereinrichtung mit einer Schmierstoffpumpe und einem Progressivverteiler**
Compact lubricating device with a lubricant pump and a progressive distributor
Dispositif de lubrification compact avec une pompe de graissage et un distributeur progressif

(43) Veröffentlichungstag der Anmeldung: 29.11.2006
(73) Patentinhaber: Baier & Köppel GmbH & Co., 91257 Pegnitz (DE)
(72) Erfinder: Brendel, Jürgen, 91278 Pottenstein (DE)
(74) Vertreter: Zech, Stefan Markus

(56) Entgegenhaltungen:
- EP-A- 1 209 038
- US-A- 4 632 648
- US-B1- 6 244 387

## Beschreibung

Die Erfindung betrifft eine Schmiereinrichtung zur Ausgabe von Schmierstoff aus einer Schmierstoffquelle an vorbestimmte Schmierstoffausgabestellen umfassend eine Schmierstoffpumpe mit einem verschieblich gelagerten Pumpenelement sowie einem Progressivverteiler mit einer Mehrzahl parallel zueinander gelagerter Dosierkolben nach dem Oberbegriff des Patentanspruchs 1.

Derartige Schmiereinrichtungen sind aus dem Stand der Technik bekannt und werden beispielsweise zur Abschmierung einer Mehrzahl von Schmierstellen an einem Fahrzeug, wie einem Lastkraftwagen, an Baumaschinen oder auch in industriellen Anlagen eingesetzt.

Die Aufgabe der vorliegenden Erfindung besteht ausgehen von den bekannten Schmiereinrichtungen darin, eine Schmiereinrichtung anzugeben, die wesentlich kompakter aufgebaut ist, so dass eine Anbringung auch in beengten Einbaulagen möglich wird.

Diese Aufgabe wird mit einer Schmiereinrichtung nach den Merkmalen des Anspruches 1 gelöst. Ein Kerngedanke der vorliegenden Erfindung besteht darin, sowohl Progressivverteiler als auch Schmierstoffpumpe in einer ein Innenteil sowie ein Außenteil aufweisenden Baueinheit unterzubringen bzw. auszubilden und dabei sowohl die Dosierkolben als auch das Pumpenelement selbst gemeinsam im Innenteil unterzubringen bzw. zu lagern.

Hierdurch wird ein äußerst kompakter Aufbau erreicht. Mit diesem kompakten Aufbau wird es nun möglich, räumlich dicht beieinanderliegende Schmierstellen, die sonst von einer räumlich oft erheblich weit beabstandeten Zentralschmieranlage versorgt werden mussten, lokal durch die erfindungsgemäße kompakte Schmiereinrichtung zu versorgen. Die erfindungsgemäße Schmiereinrichtung lässt sich durch ihren kompakten Aufbau auch in beengten Montageverhältnissen anbringen. Trotz des kompakten Aufbaus bleibt die zuverlässige Versorgung mit einer ausreichenden Menge an Schmierstoff gewährleistet.

Darüber hinaus lassen sich einzelne zu schmierende Komponenten einer komplexeren Vorrichtung, wie beispielsweise die Sattelkupplung oder die Anhängerkupplung eines Lastkraftwagens autark, d.h., mit eigener Schmiereinrichtung schon herstellerseitig ausstatten, so dass diese Komponenten beim Einbau in die komplexere Vorrichtung bzw. beim Einbau in den Lastkraftwagen nicht erst aufwendig noch an eine Zentralschmieranlage angeschlossen werden müssen.

In einer konkret bevorzugten Weiterbildung ist die Lagerung der Dosierkolben sowie des Pumpenelements in der gemeinsamen Baueinheit, konkret im Innenteil so ausgestaltet, dass sie parallel zueinander, insbesondere parallel zu einer Vorzugsachse des Grundkörpers verschieblich gelagert sind.

In einer weiter bevorzugten Ausgestaltung weist das Innenteil eine im Wesentlichen zylindrische Grundform auf, was den kompakten Aufbau der gesamten Baueinheit weiter begünstigt.

In einer besonders bevorzugten Ausgestaltung sind im Innenteil außenseitig nutförmige Kanäle eingeformt, die durch Einschieben des Innenteils in ein das Innenteil dichtend umgebendes Außenteil dichtend abgeschlossen werden. Hierdurch lassen sich ein Großteil der in einem Pumpenelement bzw. in einem Progressivverteiler notwendigen Schmierstoffkanäle in den Bereich der Mantelfläche des Innenteils verlegen, wo sie im Herstellungsprozess des Innenteils mit vergleichsweise geringem Aufwand ausgebildet werden können.

Obwohl nach der Grundidee der vorliegenden Erfindung Progressivverteiler und Schmierstoffpumpe zu einer kompakten gemeinsamen Baueinheit zusammengefasst sind, welche das wesentliche Kernstück der erfindungsgemäßen Schmiereinrichtung definiert, kann diese Schmiereinrichtung optional auch weitere Komponenten, nämlich einen Pumpenantrieb und/oder ein Reservoir als Schmierstoffquelle umfassen. Dabei kann der Pumpenantrieb beispielsweise einen Motor zur Erzeugung einer Drehbewegung und einen von der Drehbewegung des Motors angetriebenen Exzenter umfassen, der das Pumpenelement antreibt. Besonders bevorzugt wird eine Ausgestaltung, in der der Exzenter eine Zwangsführung umfasst, so dass das Pumpenelement vom Exzenter nicht nur drückend, sondern auch ziehend beaufschlagt wird. Rückholelemente, wie beispielsweise Federn o.ä., die das Pumpenelement in Anlage an eine Exzenterfläche halten, können dadurch vermieden werden. Auch dies begünstigt den einfacheren und gleichzeitig kompakteren Aufbau der gesamten Anordnung.

Nach einer weiteren bevorzugten Ausgestaltung der vorliegenden Erfindung ist innerhalb des Progressivverteilers, vorzugsweise innerhalb der Baueinheit im Außengehäuse mindestens ein Rücklaufkanal zur Rückführung von Schmierstoff im Fall einer blockierten Schmierstoffausgabestelle vorgesehen. Dieser Rücklaufkanal kann beispielsweise Schmierstoff an die Schmierstoffquelle, insbesondere in ein als Schmierstoffquelle dienendes Reservoir oder an eine andere Sammelstelle führen. Ist ein als Schmierstoffquelle dienendes Reservoir unmittelbar an die Baueinheit von Schmierstoffpumpe und Progressivverteiler angeschlossen, was weiter unten noch näher erläutert wird, so kann der Rücklaufkanal der Baueinheit zurückgeführten Schmierstoff ebenfalls unmittelbar an das als Schmierstoffquelle dienendes Reservoir ohne Zwischenschaltung gesonderter Leitungen übergeben.

Nach einem weiter bevorzugten Ausgestaltung der vorliegenden Erfindung ist mindestens ein Rücklaufkanal als Rückführung für mehrere Schmierstoffausgabestellen, vorzugsweise ein ggf. verzweigter gemeinsamer Rücklaufkanal für alle Schmierstoffausgabestellen vorgesehen. Obwohl es prinzipiell denkbar wäre, für jede Schmierstoffabgabestelle einen eigenen Rücklaufkanal, der bedarfsweise wirksam werden kann, vorzusehen, wird es als wesentlich vorteilhafter angesehen, wenn ein einziger ggf. verzweigter Rücklaufkanal für alle Schmierstoffausgabestellen gemeinsam vorgesehen ist.

In einer konkret bevorzugten Ausgestaltung zur Ausbildung des Rücklaufkanals sind die Schmierstoffausgabelstellen jeweils am Außenteil der Baueinheit vorgesehen und umfassen dabei jeweils eine Bohrung, in der entweder ein Schmierstellenanschlusselement oder eine Verschlussschraube fluiddicht eingesetzt, insbesondere eingeschraubt werden kann, wobei ein gemeinsamer Rücklaufkanal mindestens einen Teil der Bohrungen miteinander verbindet und wobei bei eingesetztem Schmierstellenanschlusselement eine Bypasshülse dafür sorgt, dass der Rücklauf gegenüber einer vorgeschalteten bzw. nachgeschalteten Bohrung (Schmierstoffausgabestelle) nicht blockiert ist und auch kein zur Ausgabe über das Schmierstellenanschlusselement vorgesehener Schmierstoff in den Rücklaufkanal eintreten kann.

Diese Ausgestaltung ermöglicht eine quasi automatische Anbindung der Schmierstoffausgabestelle an den Rücklaufkanal, für den Fall, dass die Schmierstoffausgabestelle nicht benötigt und mit einer Verschlussschraube verschlossen wird. Bekanntermaßen würde ohne das Vorsehen eines solchen Rücklaufkanals ein Verschließen der Schmierstoffausgabestelle dazu führen, dass der gesamte Progressivverteiler blockiert wird und damit eine Verteilung von Schmierstoff an die übrigen Schmierstellen verunmöglicht wird.

In einer besonders zweckmäßigen Ausgestaltung kann die Bypasshülse jeweils am stirnseitigen Ende des Schmierstellenanschlusselements fest angeordnet sein, so dass automatisch dafür gesorgt ist, dass kein zur Ausgabe über das Schmierstellenanschlusselement vorgesehener Schmierstoff in den Rücklaufkanal eintreten kann.

Wie bereits erwähnt, kann die Schmiereinrichtung weiterhin ein Reservoir umfassen, welches dauerhaft mit der Baueinheit von Progressivverteiler und Pumpenelement verbunden ist, insbesondere unmittelbar und insbesondere starr daran angeschlossen ist. Insofern kann in einer bevorzugten Ausgestaltung der Schmierstoffausgang des Reservoirs direkt mit einem Schmierstoffeintritt der Baueinheit starr verbunden werden.

In einer weiter bevorzugten Ausgestaltung umfasst das Reservoir einen Folgekolben, der über Zugfedern den Schmierstoff mit Druck beaufschlagt. Während die Beaufschlagung des Schmierstoffs im Reservoir durch Federn an sich bekannt ist, erfolgt dies nach dem Stand der Technik meist durch Druckfedern, welche an der dem Schmierstoff abgewandten Seite des Folgekolbens angreifen. Die hier vorgeschlagenen Zugfedern sind im Reservoir bevorzugtermaßen innerhalb der mit Schmierstoff gefüllten Kammer vorgesehen, so dass ein noch kompakterer Aufbau der gesamten Anordnung erzielbar ist.

Weiterhin kann mindestens eine optische und/oder mechanische Messeinrichtung zur Überwachung der Hübe des Pumpenelements und/oder des Füllstandes des Reservoirs vorgesehen sein. In einer konkret bevorzugten Ausgestaltung werden sowohl die Hübe des Pumpenelements als auch der Füllstand des Reservoirs zunächst mechanisch abgenommen und über eine gemeinsame Übertragungsstange an einen optischen Messabgriff übermittelt. Konkret kann die gemeinsame Übertragungsstange beispielsweise durch den Exzenter in Drehschwingung versetzt werden und unabhängig davon bei Annäherung des Folgekolbens des Reservoirs an seine Minimalstellung in eine lineare Auslenkung versetzt werden.

Wegen ihres kompakten Aufbaus eignet sich die erfindungsgemäße Schmiereinrichtung auch zum Einbau unter beengten Platzverhältnissen. Hierdurch wird die Möglichkeit geschaffen, die Schmierstoffpumpe einer Schmiereinrichtung nicht nur an ggf. relativ weit von den eigentlichen Schmierstellen entfernten Orten, sondern auch in beengter Einbaulage relativ nah zu den jeweils zu versorgenden Schmierstellen anzuordnen. Konkrete Anwendungsfälle für die erfindungsgemäße Schmiereinrichtung kann der Einbau an oder in Nähe einer Sattelkupplung zur Versorgung der Schmierstellen einer Sattelkupplung sein. Ebenso denkbar ist der Anbau an oder in Nähe einer Anhängerkupplung zur Versorgung der Schmierstellen einer Anhängerkupplung. Weiterhin kann die erfindungsgemäße Schmiereinrichtung in der Nähe der Achse eines Lastkraftwagens angeordnet sein und dort die Schmierstellen dieser sowie ggf. unmittelbar benachbarter Achsen abschmieren. Es versteht sich von selbst, dass die vorstehend genannten Anwendungsbeispiele rein illustrativ sind und die Anwendungsgebiete der neuen, kompakten Schmiereinrichtung keineswegs beschränken, sondern zahlreiche weitere Anwendungsfälle denkbar sind.

Entsprechend kann die erfindungsgemäße Schmiereinrichtung bevorzugtermaßen auch in Einbausituationen zur Anwendung kommen, in der eine Mehrzahl räumlich dicht beeinanderliegender Schmierstellen vorliegen. Besonders bevorzugte Einbausituationen sind solche, in denen die zu versorgenden Schmierstellen jeweils nicht mehr als 3,5 Meter auseinanderliegen. Die Erfindung wird nachstehend auch hinsichtlich weiterer Merkmale und Vorteile anhand der Beschreibung von Ausführungsbeispielen und unter Bezugnahme auf die nachstehenden Zeichnungen näher erläutert. Hierbei zeigen:
- Fig. 1: eine konkrete Ausführungsform der erfindungsgemäßen Schmiereinrichtung mit Pumpenantrieb und Reservoir in einer schematischen Perspektivansicht,
- Fig. 2: die Schmiereinrichtung nach Fig. 1 in einer modifizierten Perspektivansicht,
- Fig. 3: die Schmiereinrichtung nach den Figuren 1 und 2 in einer nochmals modifizierten Perspektivansicht,

- Fig. 4: eine Schnittansicht durch eine konkrete Ausführungsform der erfindungsgemäßen Baueinheit,
- Fig. 5: eine zur Schnittansicht nach Fig. 4 orthogonale Schnittansicht durch die erfindungsgemäße Baueinheit,
- Fig. 6: eine Draufsicht auf die Baueinheit nach Fig. 4 bzw. Fig. 5,
- Fig. 7: eine perspektivische Ansicht des Innenteils der Baueinheit nach den Figuren 4 bis 6,
- Fig. 8: eine schematische Abwicklung des Innenteils nach Fig. 7 mit Andeutung des Umsteuerschemas der Dosierkolben,
- Fig. 9: eine modifizierte Ausführungsform der erfindungsgemäßen Schmiereinrichtung in einer Anschlusssituation an einer Sattelkupplung,
- Fig. 10: die Ausführungsform der erfindungsgemäßen Schmiereinrichtung nach Fig. 9 in einer Anschlusssituation an einer LKW-Anhängerkupplung,
- Fig. 11: die Schmiereinrichtung nach den Figuren 9 und 10 in einer Anschlusssituation an der Achse eines LKW.

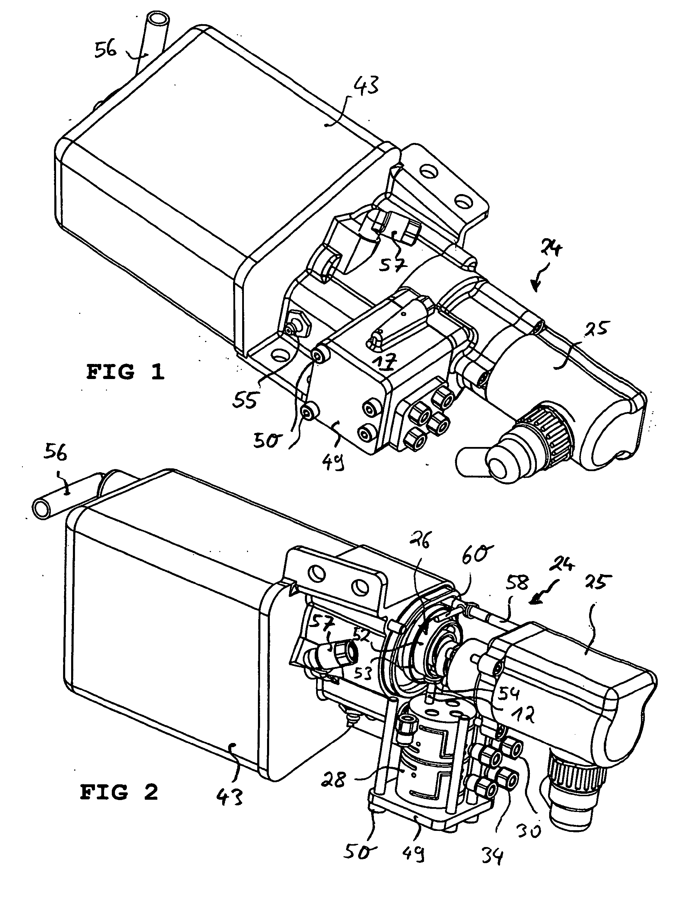

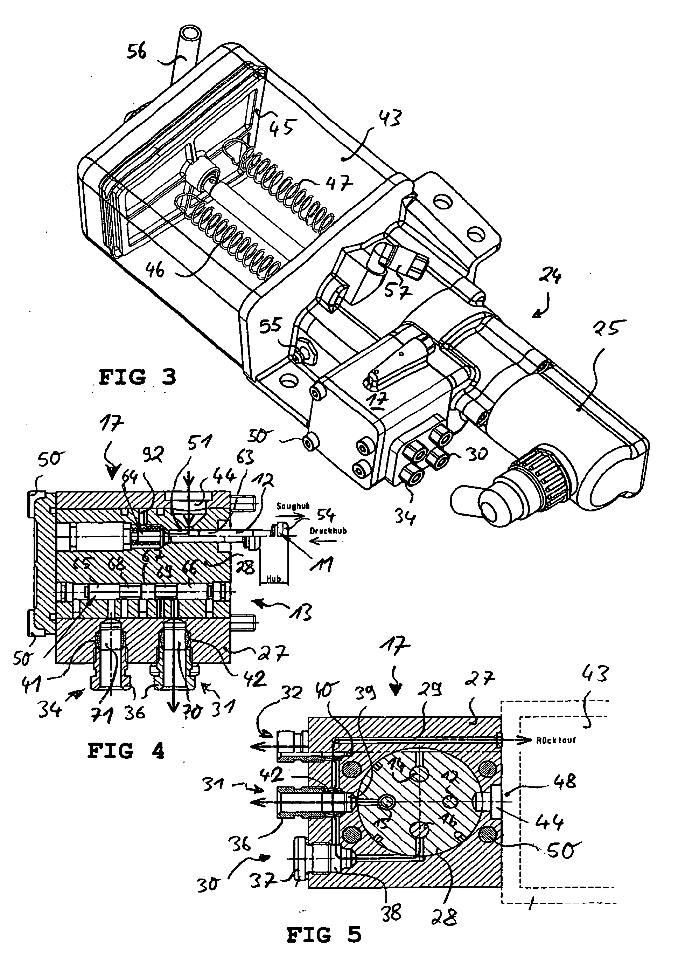

In den Figuren 1 bis 3 ist eine konkrete Ausführungsform der erfindungsgemäßen Schmiereinrichtung mit Pumpenantrieb und Reservoir in einer schematischen Perspektivansicht dargestellt. Die Schmiereinrichtung umfasst zunächst als Kernelement eine Baueinheit 17, in der eine Schmierstoffpumpe 11 sowie ein Progressivverteiler 13 untergebracht ist. Die Baueinheit 17 umfasst dabei im Wesentlichen (vgl. Fig. 2, welche die Baueinheit 17 in einer zu Illustrationszwecken teilweise geöffneten Darstellung zeigt) ein Innenteil 28 sowie (vgl. Figuren 1 und 3) ein Außenteil 27, in dem das Innenteil 28 dichtend aufgenommen ist. Am Außenteil 27 sind eine Mehrzahl von Schmierstoffausgabestellen 30 bis 35 vorgesehen, die über die Schmierstoffpumpe 11 geförderten und über den Progressivverteiler 13 auf die Schmierstoffausgabestellen verteilten Schmierstoff ausgeben, um ihn - beispielsweise über Leitungen an jeweils vorgesehene Schmierstellen zu fördern. Das Innenteil 28 ist reibschlüssig im Außenteil 27 gehalten und wird bevorzugtermaßen dadurch dichtend in das Außenteil 27 eingebracht, dass das Außenteil 27 aufgeschrumpft wird. Ein Deckel 49 schließt die Baueinheit an einer Stirnseite endseitig ab und ist über Schrauben 50 mit den Außenteil 27 der Baueinheit 17 verschraubt.

Die Schmierstoffpumpe 11 weist ein Pumpenelement 12 auf, welches in einer Bohrung 51 verschieblich gelagert ist. Dieses Pumpenelement 12 wird über einen Motor 25 und einen drehschlüssig mit dem Motor verbundenen Exzenter 26 angetrieben, wobei der Exzenter 26 eine das Pumpenelement 12 drückend beaufschlagende Exzenterfläche 52 sowie eine die Exzenterfläche 52 teilweise umgebende Exzenternut 53 umfasst. In die Exzenternut 53 greift ein endseitig am Pumpenelement 12 angeordneter Teller 54 ein, so dass das Pumpenelement 12 durch den Exzenter 26 nicht nur drückend, sondern auch ziehend beaufschlagt wird. Insgesamt wird das Pumpenelement 12 damit durch den Exzenter 26 in eine Hin- und Herbewegung versetzt, ohne dass das Vorsehen weiterer Rückholelemente, wie beispielsweise Federn o.ä. notwendig wäre.

Die gemeinsame Baueinheit 17 aus Schmierstoffpumpe 11 und Progressivverteiler 13 ist bei der vorliegenden Ausführungsform ohne Zwischenschaltung flexibler Leitungen oder Schläuche direkt bzw. starr mit einem Reservoir 43 verbunden, aus dem die Schmierstoffpumpe 11 den zur Versorgung der Schmierstellen notwendigen Schmierstoff entnimmt. Das Reservoir weist einen innerhalb des Reservoirs 43 gelagerten Folgekolben 45 auf, der über Zugfedern 46, 47 beaufschlagt wird, wobei der Schmierstoff bei der vorliegenden Ausführungsform die Zugfedern 46, 47 umgibt und durch diese mit Druck beaufschlagt wird, um das Einströmen von Schmierstoff in die Schmierstoffpumpe 11 zu erleichtern. Das Reservoir weist weiterhin einen Befüllanschluss 55, einen Entlüftungsstutzen 56 sowie eine Überfüllsicherung 57 auf. Das Reservoir 43 kann über den Befüllanschluss 55 mit Schmierstoff befüllt werden. Wenn der maximale Füllstand erreicht ist, wird zu viel eingefüllter Schmierstoff über die Überfüllsicherung 57 nach außen abgeführt, so dass eine Überbefüllung vermeidbar ist, bzw. der maximale Füllstand erkennbar ist. Alternativ ist es auch denkbar, das Reservoir als Austauschkartusche auszubilden, so dass ein Nachbefüllen des Reservoirs 43 am Einsatzort der Schmiereinrichtung nicht notwendig ist.

Schließlich ist nach einem besonderen Aspekt der vorliegenden Erfindung eine Messübertragungsstange 58 vorgesehen, die zur Kontrolle des Füllstandes des Schmierstoffs im Reservoir 43 und/oder zur Abtastung der Umdrehungszahl des Exzenters 26 ausgebildet ist. In einer konkret bevorzugten Ausgestaltung kann, wie anhand der Figuren 1 bis 3 veranschaulicht, diese Übertragung bzw. Abtastung auch in einer gemeinsamen Messübertragungsstange 58 verwirklicht sein.

Konkret wird die dargestellte Messübertragungsstange 58 durch den Folgekolben 45 kurz bevor dieser seine Endstellung erreicht in Bewegungsrichtung des Folgekolbens 45 leicht linear ausgelenkt. Diese lineare Auslenkung lässt sich über ein mechanisches und/oder elektromagnetisch arbeitendes erstes Abtastelement 59, das insbesondere als Lichtschranke ausgebildet ist, erfassen. Gleichzeitig wird die Auslenkung des Exzenters 26 durch eine im Wesentlichen orthogonal an die Messübertragungsstange 58 angeformte Exzenter-Abtaststange 60 abgetastet, wobei das distale, der Messübertragungsstange 58 abgewandte Ende der Exzenter-Abtaststange 60 bei Rotation des Exzenters 26 über die Exzenterfläche 52 gleitet, so dass die Messübertragungsstange 58 in Drehschwingung versetzt wird. Die Drehschwingung der Messübertragungsstange 58 ist über ein zweites Abtastelement 61 erfassbar, das hier konkret ebenfalls als Lichtschranke ausgebildet ist, welche über ein drehfest an der Messübertragungsstange 58 angebrachte Abtaststange 62 die Drehschwingung der Messübertragungsstange 58 erfasst, d.h. über den Durchgang der Abtaststange 62 durch das als Lichtschranke ausgebildetes zweites Abtastelement 61 die Zahl der Pumpenhübe des Pumpenelements 12 der Schmierstoffpumpe 11 erfassen kann.

In Fig. 4 ist die Baueinheit 17 in einer ersten Schnittansicht durch das Pumpenelement 12 schematisch veranschaulicht. Das Pumpenelement 12 ist wie bereits erwähnt verschieblich in einer Bohrung 51 des Innenteils 28 gelagert. Die Bohrung 51 kommuniziert bei herausgezogenem Pumpenelement 12 bzw. in der nach einem Saughub herausgezogenen Stellung mit einem Schmierstoffeintritt 44, über den Schmierstoff aus einem Schmierstoffausgang 48 des Reservoirs 43 in die Baueinheit 17 eintreten kann. Das Pumpenelement 12 umfasst einen Förderkolben 63 sowie ein über das Innenteil 28 herausragendes stirnseitiges Ende, an dem der bereits erwähnte Teller 54 angeordnet ist, der als Kopf des Pumpenelements in die bereits erwähnte Exzenternut 53 eingreift.

Bei einem anschließenden Druckhub, d.h. Verschieben des Pumpenelements 12 mit dem Förderkolben 63 in das Innenteil 28 hinein, wird der in der Bohrung 51 aufgenommene Schmierstoff in Richtung auf ein Rückschlagventil 64 gepresst. Das Rückschlagventil 64 arbeitet so, dass es Schmierstoff in einen Schmierstoffzuführungskanal 92 des Progressivverteilers überführt, jedoch einen Rücklauf aus dem Schmierstoffzuführungskanal 92 zurück in das Pumpenelement 12 verhindert. Der in der Baueinheit 17 integrierte Progressivverteiler 13 umfasst mehrere, bei der vorliegenden Ausführungsform (vgl. Fig. 5) drei Dosierkolben 14 bis 16, die wie aus Fig. 4 ersichtlich aufgebaut sind, nämlich zwei äußere Kolbenelemente 65, 66 sowie ein inneres Kolbenelement 67 umfassen. Zwischen dem zentralen, inneren Kolbenelement 67 und den äußeren Kolbenelementen 65, 66 ist jeweils ein verjüngter Bereich 68, 69 vorgesehen, die zur Aufnahme bzw. zur Überführung von Schmierstoff je nach Position des Dosierkolbens zwischen verschiedenen Kanälen des Progressivverteilers 13 dienen.

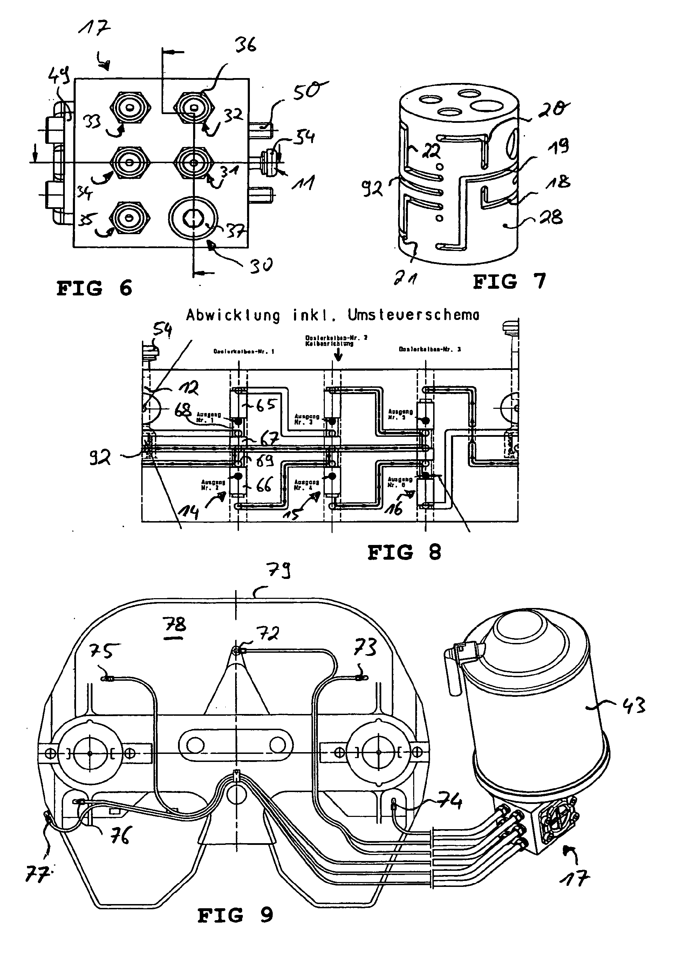

Die verschiedenen Leitungen des Progressivverteilers 13 sind, wie aus der perspektivischen Darstellung des Innenteils 28 in Fig. 7 ersichtlich wird, zu einem großen Teil von der äußeren Fläche (Mantelfläche) des Innenteils 28 her als nutförmige Kanäle 18 bis 22 eingeformt, insbesondere eingefräst, was die Herstellung erheblich erleichtert. Die Fortschaltung der Dosierkolben 14 bis 16, also das Umsteuerschema wird aus der Abwicklung nach Fig. 8 deutlich. Durch die Verschiebebewegung der Dosierkolben 14 bis 16 wird jeweils das von einem Dosierkolben an seinem stirnseitigen Ende anstehende Volumen von Schmierstoff durch Verschiebung des Dosierkolbens in Richtung auf eine Schmierstoffausgabestelle ausgegeben, wie an sich bekannt.

Aus den Figuren 4, 5 und 6 wird eine bevorzugte Ausgestaltung der Schmierstoffausgabestellen 30 bis 35 am Progressivverteiler 13 ersichtlich. Die Schmierstoffausgabestellen 30 bis 35 umfassen zunächst Bohrungen 38, 39, 40, die mit einem Innengewindeabschnitt versehen sind, in die entweder eine Verschlussschraube 37 oder ein Schmierstellenanschlusselement 36 einschraubbar ist. Über einen nach einem besonderen Aspekt der Erfindung vorgesehenen Rücklaufkanal 29, der mehrere Bohrungen 38, 39, 40 ggf. auch alle Bohrungen der Schmierstoffausgabestellen 30 bis 35 miteinander verbinden kann, wird bei einer nicht benötigten Schmierstoffausgabestelle, die mit einer Verschlussschraube 37 verschlossen ist, der von den Dosierkolben an diese Schmierstelle ausgegebene Schmierstoff in den Rücklaufkanal 29 überführt, so dass die Dosierkolben nicht durch sich aufstauenden Schmierstoff blockieren, sondern weiter fortschalten können. Eine Bypasshülse 41, 42 mit einer zentralen Öffnung 70, 71, die koaxial zum zugeordneten Schmierstellenanschlusselement 36 ausgerichtet ist, bewirkt, dass im Rücklaufkanal 29 transportierter Schmierstoff über die Bohrung 39 der betreffenden Schmierstoffausgabestelle 31 geleitet werden kann, ohne dass eine Fluidverbindung zu dem über das Schmierstellenanschlusselement 36 ausgegebenen Schmierstoff besteht. Der an der betreffenden Schmierstoffausgabestelle abzugebende Schmierstoff wird daher durch die zentrale Öffnung 70, 71 der Bypasshülse 41, 42 gefördert, wohingegen Schmierstoff im Rücklaufkanal 29 außen an der Bypasshülse innerhalb der Bohrung 39 vorbeifließen kann.

Diese Situation wird aus der Darstellung in Fig. 5 verständlich, in der in der untersten Schmierstoffausgabestelle eine Verschlussschraube 37 eingesetzt ist, so dass dort ausgegebener Schmierstoff über den Rücklaufkanal 29 zurück an das Reservoir 43 geführt werden kann, das nach einem besonders bevorzugten Aspekt der vorliegenden Erfindung starr an die Baueinheit 17 unmittelbar angeschlossen sein kann. In einer bevorzugten Ausgestaltung kann die Bypasshülse 41, 42 am in Einführrichtung vorderen Ende des Schmierstellenanschlusselements verliersicher angebracht, insbesondere einstückig angeformt sein.

In Fig. 6 ist die Baueinheit 17 in einer Ansicht frontal auf die Schmierstoffausgabestellen 30 bis 35 dargestellt, wobei entsprechend der Darstellung in Fig. 5 die Schmierstoffausgabestelle rechts unten mit einer Verschlussschraube 37 verschlossen ist. Das teilweise aus der Baueinheit 17 herausragende Pumpenelement 12 kann mit einem beliebigen Pumpenantrieb 24, vorzugsweise unter Zwischenschaltung eines Exzenters 26, angetrieben werden, wobei ein elektrischer, hydraulischer, pneumatischer oder mechanischer Antrieb in Betracht kommen kann. Insgesamt ist die hier vorgeschlagene Baueinheit sehr kompakt und universell einsetzbar. Es können jeweils geeignete Antriebsmodule angesetzt werden. Ein Reservoir 43 kann je nach Bedarf in Größe und Gestalt angepasst werden und bevorzugtermaßen direkt zur Ausbildung einer insgesamt kompakten Einheit an die Baueinheit 17, ggf. auch in Gestalt einer Wechselkartusche, angeschlossen werden. Selbstverständlich ist es aber auch möglich, ein Reservoir über flexible Leitungen mit der Baueinheit 17 zu verbinden.

Typische Einbausituationen für die erfindungsgemäße Schmiereinrichtung sind in den Figuren 9 bis 11 veranschaulicht. In Fig. 9 ist die Installation der erfindungsgemäßen Schmiereinrichtung umfassend eine Baueinheit 17 sowie ein unmittelbar hieran angeschlossenes Reservoir 43 zur Versorgung der Schmierstellen 72 bis 77 einer Sattelkupplung 78 veranschaulicht. Die erfindungsgemäße Schmiereinrichtung kann entweder unmittelbar an der Sattelkupplung 78 selbst, beispielsweise in einem frontalen Bereich 79 oder in unmittelbarer Nähe zur Sattelkupplung 79 an einem Fahrzeug befestigt werden.

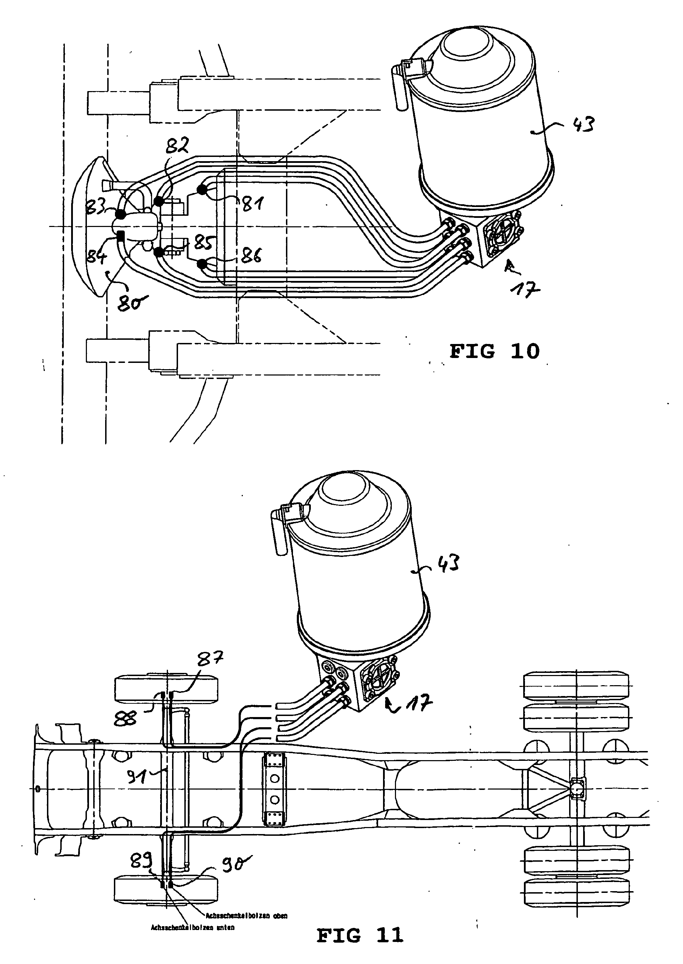

In Fig. 10 ist ein Anwendungsbeispiel der erfindungsgemäßen Schmiereinrichtung zur Abschmierung einer LKW-Anhängerkupplung 80 veranschaulicht. Die LKW-Anhängerkupplung 80 wird durch die erfindungsgemäße Schmiereinrichtung, hier über konkret sechs Schmierstellen 81 bis 86 mit Schmierstoff versorgt.

In Fig. 11 ist ein weiteres Anwendungsbeispiel zur Abschmierung mehrerer Schmierstellen 87 bis 90 im Bereich der Achse 91 eines LKW veranschaulicht, wobei die erfindungsgemäße Schmiereinrichtung mit der kompakten Baueinheit 17 dezentral, d.h. relativ nahe an der Achse 91 des Fahrzeugs befestigt werden kann.

### Bezugszeichenliste

- 11: Schmierstoffpumpe
- 12: Pumpenelement
- 13: Progressivverteiler
- 14 bis 16: Dosierkolben
- 17: Baueinheit
- 18 bis 22: nutförmige Kanäle
- 24: Pumpenantrieb
- 25: Motor
- 26: Exzenter
- 27: Außenteil
- 28: Innenteil
- 29: Rücklaufkanal
- 30 bis 35: Schmierstoffausgabestellen
- 36: Schmierstellenanschlusselement
- 37: Verschlussschraube
- 38, 39, 40: Bohrungen (Schmierstoffausgabestellen)
- 41, 42: Bypasshülse
- 43: Reservoir
- 44: Schmierstoffeintritt (Baueinheit)
- 45: Folgekolben
- 46, 47: Zugfedern
- 48: Schmierstoffausgang (Reservoir)
- 49: Deckel
- 50: Schrauben (Deckel)
- 51: Bohrung (Pumpenelement)
- 52: Exzenterfläche
- 53: Exzenternut
- 54: Teller
- 55: Befüllanschluss
- 56: Entlüftungsstutzen
- 57: Überfüllsicherung

- 58: Messübertragungsstange
- 59: erstes Abtastelement
- 60: Exzenter-Abtaststange
- 61: zweites Abtastelement
- 62: Abtaststange
- 63: Förderkolben
- 64: Rückschlagventil
- 65, 66: äußere Kolbenelemente
- 67: inneres Kolbenelement
- 68, 69: verjüngter Bereich
- 70, 71: zentrale Öffnung (Bypasshülse)
- 72 bis 77: Schmierstellen
- 78: Sattelkupplung
- 79: frontaler Bereich
- 80: LKW-Anhängerkupplung
- 81 bis 86: Schmierstellen
- 87 bis 90: Schmierstellen
- 91: Achse
- 92: Schmierstoffzuführungskanal

## Patentansprüche

1. Schmiereinrichtung zur Ausgabe von Schmierstoff aus einer Schmierstoffquelle an vorbestimmte Schmierstoffausgabestellen, umfassend:
eine Schmierstoffpumpe (11) mit einem verschieblich gelagerten Pumpenelement (12) sowie einem Progressivverteiler (13) mit einer Mehrzahl parallel zueinander gelagerter Dosierkolben (14, 15, 16),
**dadurch gekennzeichnet,**
**dass** Progressivverteiler (13) und Schmierstoffpumpe (11) in einer ein Innenteil (28) sowie ein Außenteil (27) umfassenden Baueinheit (17) ausgebildet sind, und
**dass** die Dosierkolben (14, 15, 16) und das Pumpenelement (12) gemeinsam im Innenteil (28) untergebracht sind.

2. Schmiereinrichtung nach Anspruch 1,
**dadurch gekennzeichnet, dass** die Dosierkolben (14, 15, 16) und das Pumpenelement (12) jeweils parallel zueinander, insbesondere parallel zu einer Vorzugsachse des Innenteils (28), gelagert sind.

3. Schmiereinrichtung nach Anspruch 1 oder 2,
**dadurch gekennzeichnet,**
**dass** das Innenteil (28) eine im Wesentlichen zylindrische Grundform aufweist.

4. Schmiereinrichtung nach einem der Ansprüche 1 bis 3,
**dadurch gekennzeichnet,**
**dass** im Innenteil (28) außenseitig nutförmige Kanäle (18 bis 23) eingeformt sind, die durch Einschieben des Innenteils (28) in das das Innenteil (28) dichtend umgebende Außenteil (27) zur Außenseite dichtend abgeschlossen werden.

5. Schmiereinrichtung nach einem der Ansprüche 1 bis 4,
**dadurch gekennzeichnet,**
**dass** die Schmiereinrichtung weiterhin einen Pumpenantrieb (24) umfasst, wobei der Pumpenantrieb (24), einen Motor (25) zur Erzeugung einer Drehbewegung und einen von der Drehbewegung des Motors (25) angetriebenen Exzenter (26) aufweist, der das Pumpenelement (12) antreibt.

6. Schmiereinrichtung nach einem der Ansprüche 1 bis 5,
**dadurch gekennzeichnet,**
**dass** innerhalb des Progressivverteilers (13), vorzugsweise der Baueinheit (17), insbesondere im Außenteil (27), mindestens ein Rücklaufkanal (29) zur Rückführung von Schmierstoff im Fall einer blockierten Schmierstoffausgabestelle (30 bis 35) vorgesehen ist.

7. Schmiereinrichtung nach Anspruch 6,
**dadurch gekennzeichnet,**
**dass** mindestens ein Rücklaufkanal (29) eine Rückführung für mehrere Schmierstoffausgabenstellen (30 bis 35) definiert.

8. Schmiereinrichtung nach einem der Ansprüche 1 bis 7,
**dadurch gekennzeichnet,**
**dass** die Schmierstoffausgabestellen (30 bis 35) jeweils am Außenteil der Baueinheit (17) vorgesehen sind und eine Bohrung (38; 39; 40) umfassen, in der entweder ein Schmierstellenanschlusselement (36) oder eine Verschlussschraube (37) fluiddicht eingesetzt, insbesondere eingeschraubt werden kann,
wobei ein gemeinsamer Rücklaufkanal (29) mindestens einen Teil der Bohrungen (38; 39; 40) miteinander verbindet und wobei bei eingesetztem Schmierstellenanschlusselement (36) eine Bypasshülse (41; 42) dafür sorgt, dass der Rücklaufkanal (29) gegenüber einer vorgeschalteten bzw. nachgeschalteten Bohrung (38; 39; 40) nicht blockiert ist und auch kein zur Ausgabe über das Schmierstellenanschlusselement (36) vorgesehener Schmierstoff in den Rücklaufkanal (29) eintreten kann.

9. Schmiereinrichtung nach einem der Ansprüche 1 bis 8,
**dadurch gekennzeichnet, dass** die Schmiereinrichtung weiterhin ein Reservoir (43) umfasst, welches dauerhaft mit der Baueinheit (17) aus Progressivverteiler (13) und Pumpenelement (12) verbunden ist.

10. Schmiereinrichtung nach Anspruch 9,
**dadurch gekennzeichnet,**
**dass** ein Schmierstoffausgang (48) des Reservoirs (43) direkt mit einem Schmiermitteleintritt (44) der Baueinheit (17) aus Progressivverteiler (13) und Pumpenelement (12) starr verbunden ist.

11. Schmiereinrichtung nach Anspruch 9 oder 10,
**dadurch gekennzeichnet,**
**dass** das Reservoir (43) einen Folgekolben (45) aufweist, der über Zugfedern (46, 47) den Schmierstoff mit Druck beaufschlagt.

12. Schmiereinrichtung nach einem der vorhergehenden Ansprüche,
**dadurch gekennzeichnet,**
**dass** eine optische und/oder mechanische Messeinrichtung zur Überwachung der Hübe des Pumpenelements (12) und/oder des Füllstandes des Reservoirs (43) vorgesehen ist.

13. Schmiereinrichtung nach einem der Ansprüche 1 bis 12, zur Verwendung zur Schmierung einer Sattelkupplung oder zur Abschmierung einer oder mehreren dicht beabstandeten Achsen eines Fahrzeugs zugeordneten Schmierstellen oder zur Abschmierung einer Anhängerkupplung.

## Claims

1. Lubricating device for delivering lubricant from a lubricant source to predetermined lubricant delivery points, comprising:
a lubricant pump (11) having a displaceably mounted pump element (12) and a progressive distributor (13) having a plurality of metering pistons (14, 15, 16) mounted parallel to one another, **characterised in that** progressive distributor (13) and lubricant pump (11) are designed in a modular unit (17) comprising an inner part (28) and an outer part (27), and **in that** the metering pistons (14, 15, 16) and the pump element (12) are accommodated together in the inner part (28).

2. Lubricating device according to claim 1, **characterised in that** the metering pistons (14, 15, 16) and the pump element (12) are mounted in each case parallel to one another, in particular parallel to an axis of preference of the inner part (28).

3. Lubricating device according to claim 1 or 2, **characterised in that** the inner part (28) has an essentially cylindrical basic shape.

4. Lubricating device according to one of claims 1 to 3, **characterised in that** groove-like channels (18 to 23), which are closed in sealing manner towards the outer side by inserting the inner part (28) in the outer part (27) surrounding the inner part (28) in sealing manner, are moulded in the inner part (28) on the outer side.

5. Lubricating device according to one of claims 1 to 4, **characterised in that** the lubricating device also comprises a pump drive (24), wherein the pump drive (24) has a motor (25) for producing a rotary movement and an eccentric (26) driven by the rotary movement of the motor (25) and which drives the pump element (12).

6. Lubricating device according to one of claims 1 to 5, **characterised in that** at least one return channel (29) for returning lubricant in the event of a blocked lubricant delivery point (30 to 35) is provided within the progressive distributor (13), preferably the modular unit (17), in particular in the outer part (27).

7. Lubricating device according to claim 6, **characterised in that** at least one return channel (29) defines a return for several lubricant delivery points (30 to 35).

8. Lubricating device according to one of claims 1 to 7, **characterised in that** the lubricant delivery points (30 to 35) are provided in each case on the outer part of the modular unit (17) and comprise a bore (38; 39; 40), in which either a lubricating point connection element (36) or a closure screw (37) may be inserted, in particular screwed in, in fluid-tight manner, wherein a common return channel (29) connects at least one part of the bores (38; 39; 40) to one another and wherein when the lubricating point connection element (36) is inserted, a bypass sleeve (41; 42) ensures that the return channel (29) is not blocked with respect to an upstream or downstream bore (38; 39; 40) and also no lubricant provided for delivery via the lubricating point connection element (36) may enter the return channel (29).

9. Lubricating device according to one of claims 1 to 8, **characterised in that** the lubricating device also comprises a reservoir (43), which is connected permanently to the modular unit (17) comprising progressive distributor (13) and pump element (12).

10. Lubricating device according to claim 9, **characterised in that** a lubricant outlet (48) of the reservoir (43) is rigidly connected directly to a lubricant inlet (44) of the modular unit (17) comprising progressive distributor (13) and pump element (12).

11. Lubricating device according to claim 9 or 10, **characterised in that** the reservoir (43) has a follow-up piston (45), which exposes the lubricant to pressure via tension springs (46, 47).

12. Lubricating device according to one of the preceding claims, **characterised in that** an optical and/or mechanical measuring device is provided to monitor the strokes of the pump element (12) and/or the level of the reservoir (43).

13. Lubricating device according to one of claims 1 to 12, for use for lubricating a fifth wheel or for greasing one or more lubricating points assigned to tightly spaced axes of a vehicle or for greasing a trailer coupling.

## Revendications

1. Dispositif de lubrification destiné à délivrer un lubrifiant contenu dans une source de lubrifiant en des points de distribution de lubrifiant prédéfinis, comportant une pompe de graissage (11) avec un élément de pompage (12) monté mobile en translation ainsi qu'un distributeur progressif (13) avec une pluralité de pistons de dosage (14, 15, 16) montés parallèles entre eux,
**caractérisé en ce que**,
le distributeur progressif (13) et la pompe de graissage (11) sont agencés dans un bloc comprenant une pièce intérieure (28) et une pièce extérieure (27),
et **en ce que** les pistons de dosage (14, 15, 16) et l'élément de pompage (12) sont logés ensemble dans la pièce intérieure (28).

2. Dispositif de lubrification selon la revendication 1, **caractérisé en ce que** les pistons de dosage (14, 15, 16) et l'élément de pompage (12) sont parallèles les uns aux autres, notamment parallèles à un axe préférentiel de la pièce intérieure (28).

3. Dispositif de lubrification selon la revendication 1 ou la revendication 2, **caractérisé en ce que** la pièce intérieure (28) affecte une forme de base sensiblement cylindrique.

4. Dispositif de lubrification selon l'une quelconques des revendications 1 à 3, **caractérisé en ce que** sur l'extérieur de la pièce intérieure (28) sont formés des canaux en forme de rainures (18 à 23) qui sont hermétiquement fermés vis-à-vis de l'extérieur après insertion de la pièce intérieure (28) dans la pièce extérieure (27) qui entoure hermétiquement la pièce intérieure (27).

5. Dispositif de lubrification selon l'une quelconque des revendications 1 à 4, **caractérisé en ce que** le dispositif de lubrification comprend en outre un dispositif d'entraînement de pompe (24), ledit dispositif d'entraînement de pompe (24) comportant un moteur (25) produisant un mouvement rotatif, et un excentrique (26) entraîné par le mouvement rotatif du moteur (25), lequel excentrique (26) entraîne l'élément de pompage (12).

6. Dispositif de lubrification selon l'une quelconque des revendications 1 à 5, **caractérisé en ce qu'**au moins un canal de retour (29) est prévu à l'intérieur du distributeur progressif (13), de préférence à l'intérieur du bloc (17) et notamment dans la pièce extérieure (27), pour permettre le retour du lubrifiant au cas où un point de distribution de lubrifiant (30 à 35) serait bloqué.

7. Dispositif de lubrification selon la revendication 6, **caractérisé en ce qu'**au moins un canal de retour (29) permet le retour de lubrifiant à partir de plusieurs points de distribution de lubrifiant (30 à 35).

8. Dispositif de lubrification selon l'une quelconque des revendications 1 à 7, **caractérisé en ce que** les points de distribution de lubrifiant (30 à 35) sont chacun prévus sur la pièce extérieure du bloc (17) et consistent en un perçage (38 ; 39 ; 40) dans lequel peut être inséré(e) et notamment vissé(e), de manière étanche aux fluides, soit un raccord de point de lubrification (36) soit une vis d'obturation (37),
un canal commun de retour (29) reliant entre eux au moins une partie des perçages (38 ; 39 ; 40) et une douille de dérivation (41 ; 42) veillant, lorsqu'un raccord de point de lubrification (36) est en place, à ce que le canal de retour (29) ne soit pas bloqué par rapport à un perçage (38 ; 39 ; 40) situé en amont ou en aval, et également à ce que le lubrifiant devant sortir par le raccord de point de lubrification (36) ne puisse aucunement entrer dans le canal de retour (29).

9. Dispositif de lubrification selon l'une quelconque des revendications 1 à 8, **caractérisé en ce que** le dispositif de lubrification comprend en outre un réservoir (43) qui est relié durablement avec le bloc (17) formé par le distributeur progressif (13) et l'élément de pompage (12).

10. Dispositif de lubrification selon la revendication 9, **caractérisé en ce qu'**une sortie de lubrifiant (48) du réservoir (43) est reliée directement et de manière rigide à l'entrée de lubrifiant (44) du bloc (17) formé par le distributeur progressif (13) et l'élément de pompage (12).

11. Dispositif de lubrification selon la revendication 9 ou la revendication 10, **caractérisé en ce que** le réservoir (43) comprend un piston suiveur (45) qui met en pression le lubrifiant par l'intermédiaire de ressorts de traction (46, 47).

12. Dispositif de lubrification selon l'une quelconque des revendications précédentes, **caractérisé en ce qu'**un dispositif de mesure optique et/ou mécanique est prévu pour contrôler les courses de l'élément de pompage (12) et/ou le niveau de remplissage du réservoir (43).

13. Dispositif de lubrification selon l'une quelconque des revendications 1 à 12 destiné à être utilisé pour lubrifier une sellette d'attelage ou pour lubrifier un ou plusieurs essieux adjacents d'un véhicule ou pour lubrifier un dispositif d'attelage de remorque.
